# FASCICULE DE BREVET EUROPEEN

(11) **EP 1 982 859 B1**
(45) Date de publication et mention de la délivrance du brevet: **07.04.2010**
(21) Numéro de dépôt: 08290371.7
(22) Date de dépôt: 15.04.2008
(51) Int. Cl.: B60J 10/08, B60J 10/00

(54) **Module d'étanchéité pour baie de véhicule à moteur, et une telle baie l'incorporant**
Abdichtungsmodul für Kraftfahrzeugfenster und Kraftfahrzeug, das ein solches Fenster umfasst
Watertight module for a motor vehicle bay, and such a bay including same

(30) Priorité: 18.04.2007 FR 0702803
(43) Date de publication de la demande: 22.10.2008
(73) Titulaire: Hutchinson, 75008 Paris (FR)
(72) Inventeur: Delevacque, Xavier, 45700 Villemandeur (FR); Boursault, Xavier, 45120 Chalette sur Loing (FR)
(74) Mandataire: Bolinches, Michel Jean-Marie

(56) Documents cités:
- EP-A- 1 288 049
- GB-A- 2 242 221
- GB-A- 2 384 514
- US-A1- 2002 178 656
- US-A1- 2003 173 748

## Description

La présente invention concerne un module d'étanchéité qui est destiné à équiper un cadre d'ouvrant ou de dormant d'une baie de véhicule à moteur, et une telle baie incorporant ce module d'étanchéité. L'invention s'applique à tous types de véhicules à moteur, tels que des automobiles, des poids-lourds, des autobus ou même des trains.

De manière connue, les modules d'étanchéité pour portes latérales d'automobiles qui comportent aux angles des ouvrants ou dormants de ces portes des jonctions entre, d'une part, une pièce moulée par injection au moins en partie rigide comme par exemple un joint vertical de lissage, un joint entre aile et porte ou un joint entre portes et, d'autre part, une pièce souple d'étanchéité extrudée comme par exemple un joint antisalissure ou « bas de marche », utilisent pour réaliser ces jonctions un ou plusieurs pions de clipage dont est pourvue la pièce souple extrudée et que l'on vient cliper dans des orifices correspondants de clipage formés dans la pièce moulée.

Un inconvénient majeur de cette jonction mécanique connue par clipage est que les orifices de clipage à former dans la pièce moulée peuvent nécessiter en fonction de leurs axes respectifs une cinématique de moule particulière, ce qui est susceptible de générer un surcoût pour la fabrication de ces pièces et donc pour l'assemblage des modules correspondants. En outre, il convient de noter que l'insertion du ou des pions de clipage dans la pièce souple extrudée requiert une opération de perçage supplémentaire, ce qui vient encore grever le coût d'assemblage des pièces moulées et extrudées.

Le document US-A-2003/173748 présente à la figure 7 un système de jonction entre deux profilés d'étanchéité extrudés qui est constitué d'une pièce moulée dans laquelle est formé un crochet en forme de gorge recevant une patte en saillie du profilé extrudé adjacent. Le module d'étanchéité incorporant ce système de jonction est spécifiquement destiné à équiper le compartiment moteur d'un véhicule automobile, et non un dormant ou un ouvrant de porte latérale avant ou arrière d'automobile.

Un but de la présente invention est de proposer un module d'étanchéité pour baie de véhicule à moteur qui permette de remédier à ces inconvénients, ce module comprenant au moins un profilé moulé par injection qui est au moins partiellement rigide et un profilé d'étanchéité souple et extrudé, ces profilés étant adaptés pour être montés sur un cadre d'un ouvrant ou d'un dormant de la baie, ce module présentant au moins une zone de jonction entre ces profilés où le profilé extrudé est fixé sur le profilé moulé, le ou chaque profilé extrudé étant directement retenu par le profilé moulé correspondant dans ladite ou chaque zone de jonction via un crochet formé dans ce profilé moulé.

A cet effet, un module d'étanchéité selon l'invention est tel que ce profilé moulé est un joint qui est destiné à équiper l'intérieur d'une porte latérale avant ou arrière d'automobile ou du dormant entourant cette porte, et qui est choisi dans le groupe constitué par les joints de lissage, les joints entre une aile et une porte, les joints entre portes adjacentes, les lécheurs et les coulisses, ladite ou chaque zone de jonction étant prévue en l'un des angles de ladite porte.

On notera que le profilé extrudé est assemblé selon l'invention sans intermédiaire sur le profilé moulé adjacent (i.e. sans organe de liaison à l'interface de jonction entre les deux profilés extrudé et moulé), contrairement aux modules d'étanchéité de l'art antérieur requérant des pions de clipage.

Cet assemblage de l'invention en chacune de ces zones de jonction permet ainsi de s'affranchir de ces pions de clipage sur les profilés extrudés et également des orifices correspondants conçus pour les recevoir sur les profilés moulés, ce qui dispense notamment d'utiliser la cinématique supplémentaire précitée pour le moule d'injection. Il en résulte un coût de fabrication et d'assemblage du module qui est réduit de manière significative en comparaison des modules de l'art antérieur.

Selon une autre caractéristique de l'invention, ledit crochet peut être formé par une gorge de guidage du profilé moulé, dans laquelle est enfoncée une patte de montage dudit profilé extrudé. Avantageusement, cette gorge peut présenter une section transversale sensiblement en U et le profilé extrudé peut présenter une section transversale qui est typiquement sensiblement en forme de « σ », comprenant une partie d'étanchéité de type tubulaire qui se termine par cette patte de montage formant le sommet du « σ ».

Selon une autre caractéristique de l'invention, ledit profilé moulé peut comprendre, dans ladite ou chaque zone de jonction, une partie rigide de tenue et de guidage qui peut présenter une dureté Shore D égale ou supérieure à 30, étant par exemple à base de polypropylène, d'un polyamide, de polycarbonate, d'un terpolymère ASA (acrylique/ styrène/ acrylonitrile) ou d'un vulcanisat thermoplastique (TPV).

Avantageusement, ladite partie rigide de tenue et de guidage peut présenter en saillie sur sa longueur une pluralité de contreforts espacés et sensiblement en forme de triangles rectangles, chaque contrefort épaulant une paroi latérale de ladite gorge de guidage qui se prolonge à 90° environ par un fond de cette gorge.

Avantageusement, le profilé moulé peut comprendre également (à titre optionnel, en plus de ladite partie rigide de tenue et de guidage) une lèvre de poussée du profilé extrudé qui s'étend à partir d'une extrémité de ladite paroi latérale de ladite gorge et qui est apte à appuyer sur ladite patte de montage de sorte à la maintenir au fond de ladite gorge. Cette lèvre de poussée peut par exemple former sensiblement, en section transversale, le jambage d'un « T » dont le sommet s'étend à partir de ladite extrémité et se termine par une portion d'accostage apte à venir en appui contre ledit cadre. Avantageusement, ladite lèvre de poussée présente une dureté Shore A comprise entre 40 et 80.

Avantageusement, le profilé moulé peut comprendre en outre (toujours à titre optionnel, en plus de ladite partie rigide de tenue ou de guidage et éventuellement de ladite lèvre de poussée) un moyen de retenue du profilé extrudé qui est apte à enserrer partiellement ladite partie d'étanchéité tubulaire.

Ce moyen de retenue comprend de préférence une lèvre souple de retenue qui prolonge le fond de ladite gorge sensiblement dans la même direction, puis se prolonge en sens inverse par une portion recourbée en direction de l'entrée de ladite gorge en ménageant avec cette dernière un espace pour coincer ladite partie d'étanchéité tubulaire en appui sur ladite lèvre de retenue. On notera que ce moyen de retenue pourrait en variante être constitué d'un plot (ou « plug » en anglais) remplissant la même fonction de retenue de la partie d'étanchéité du profilé extrudé.

Selon une autre caractéristique de l'invention, ledit module d'étanchéité peut être avantageusement destiné à équiper l'intérieur d'une porte latérale avant ou arrière d'automobile ou bien du dormant entourant cette porte, ladite ou chaque zone de jonction étant prévue en l'un des angles de ladite porte.

Avantageusement, ledit profilé extrudé est un joint d'étanchéité choisi dans le groupe constitué par les joints antisalissure, les joints « bas de marche », les lécheurs et les coulisses et les joints de double étanchéité.

Selon un exemple de réalisation de l'invention, ledit profilé moulé et ledit profilé extrudé peuvent être destinés à former un joint supérieur de double étanchéité sur caisse pour ladite porte.

De manière générale, on notera qu'un module d'étanchéité selon l'invention est applicable à toutes jonctions sur un véhicule à moteur entre une pièce moulée par mono-injection ou bien par multi-injection (e.g. par bi-injection) qui est au moins partiellement rigide et un profilé d'étanchéité de type souple et extrudé.

Une baie de véhicule à moteur selon l'invention, telle qu'un dormant ou un ouvrant de porte latérale avant ou arrière d'automobile, est telle qu'elle est équipée d'un module d'étanchéité selon l'invention tel que défini ci-dessus.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue schématique de la face interne d'une porte avant d'automobile équipée d'un module d'étanchéité selon l'invention en deux zones de jonction entre profilés extrudés et moulés,
la figure 2a est une vue schématique de la face interne d'une porte arrière d'automobile équipée d'un module d'étanchéité selon un premier exemple de l'invention en quatre zones de jonction entre profilés extrudés et moulés,
la figure 2b est une variante de la figure 2a où la face interne de la porte arrière est équipée d'un module d'étanchéité selon un second exemple de l'invention,
la figure 3 est une vue partielle latérale d'une automobile équipée de modules d'étanchéité sur caisse en d'autres zones de jonction selon d'autres exemples de l'invention,
la figure 4 est une vue partielle en section transversale d'une zone de jonction selon l'art antérieur entre un profilé extrudé assemblé sur un profilé moulé qui est monté sur un cadre de porte,
la figure 5 est une vue partielle à la fois en perspective et en section transversale d'un profilé moulé par injection selon l'invention qui est destiné à être monté sur un cadre de porte et qui est apte à recevoir en fixation un profilé extrudé de type connu, dans une zone de jonction par exemple illustrée à la figure 1,
la figure 6 est une vue partielle en section transversale selon le plan VI-VI de la figure 5 d'un profilé moulé par injection selon l'invention qui correspond à une variante du profilé de la figure 5 et qui est monté sur un cadre de porte, et
la figure 7 est une vue partielle en section transversale selon le plan VII-VII de la figure 5 d'un module d'étanchéité selon l'invention comprenant un profilé extrudé assemblé directement sur le profilé moulé de la figure 5 qui est monté sur ce cadre de porte.

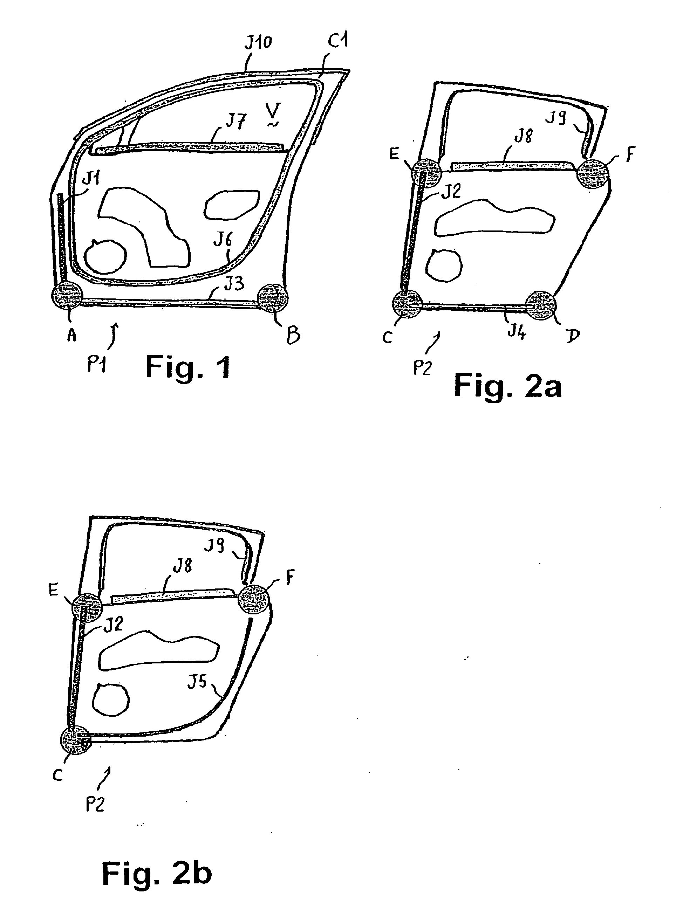

Les portes avant P1 et arrière P2 pour automobile qui sont illustrées aux figures 1, 2a et 2b sont notamment équipées, de manière connue, d'un joint vertical de lissage J1, J2 moulé par injection (également appelé joint auxiliaire par l'homme du métier) et d'au moins un joint d'étanchéité antisalissure J3 et J4 (figure 2a) ou J5 (figure 2b) qui est extrudé. Dans le cas de la porte avant P1, ce joint antisalissure comprend un brin horizontal J3 s'étendant dans la partie inférieure de celle-ci et, dans le cas de la porte arrière P2, il comprend dans l'exemple de la figure 2a un brin horizontal J4 s'étendant dans la partie inférieure de la porte P2 et, dans la variante de la figure 2b, un brin cintré J5 horizontal puis sensiblement vertical s'étendant dans la partie arrière de cette porte P2.

Sont également représentés à ces figures 1 et 2a, 2b :
- un joint de garnissage intérieur J6 en forme de boucle fermée pour la figure 1 qui est disposé, dans sa partie inférieure, à l'intérieur du joint de lissage J1 et du joint antisalissure J3 et, dans sa partie supérieure, autour du cadre C1 du vitrage V de la porte P1,
- un joint de léchage ou lécheur interne J7, J8 respectivement à la figure 1 et aux figures 2a, 2b,
- un joint de coulisse J9 aux figures 2a et 2b, et
- un joint de double d'étanchéité J10 à la figure 1 (également appelé joint « de jet d'eau » par l'homme du métier).

Comme illustré à la figure 1, les zones de jonction concernées à la porte avant P1 entre chaque profilé extrudé à fixer sur un profilé moulé sont par exemple identifiées en A et B, s'agissant dans cet exemple de réalisation d'une zone de recouvrement entre une extrémité du joint antisalissure J3 et l'extrémité inférieure en regard du joint de lissage J1.

Comme illustré aux figures 2a et 2b, les zones de jonction concernées à la porte arrière P2 entre chaque profilé extrudé à fixer sur un profilé moulé sont par exemple identifiées en C, D (seulement pour la figure 2a), E et F, s'agissant également dans ces exemples d'une zone de recouvrement C, D entre une extrémité du joint antisalissure J4 et l'extrémité inférieure en regard du joint de lissage J2 ou bien d'une zone de recouvrement E, F entre ce joint de lissage J2 et un joint de vitrage de type lécheur J8 ou coulisse J9.

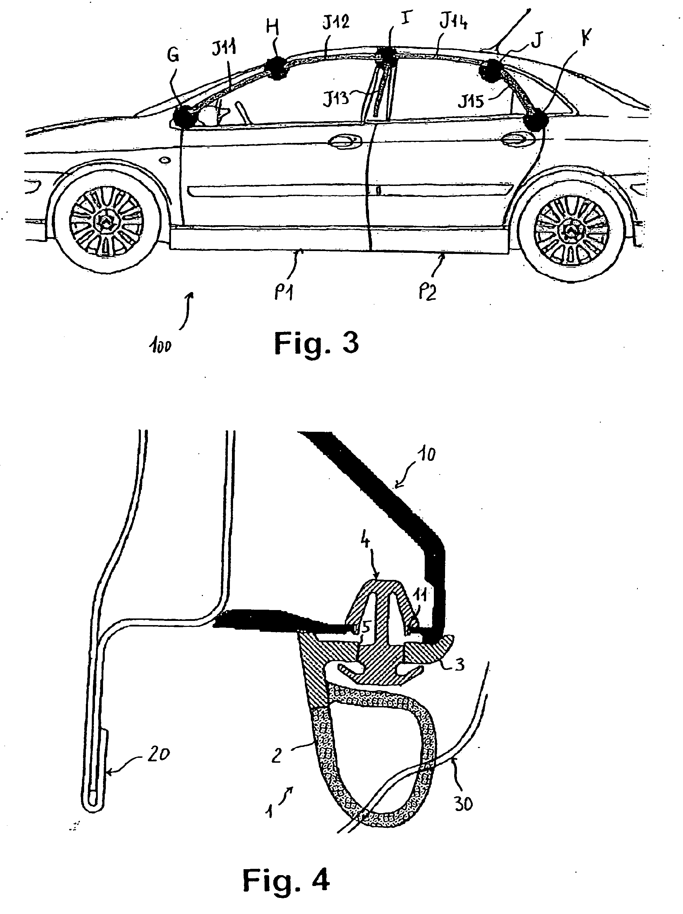

La figure 3 illustre des variantes de réalisation de zones de jonction G, H, I, J, K entre profilés moulé et extrudé qui ont toutes en commun d'être localisées sur la caisse de l'automobile 100. Plus précisément, de l'avant vers l'arrière de cette automobile 100, on peut distinguer :
- une zone de jonction G qui est disposée au niveau de l'extrémité avant de la porte avant P1 et qui est formée d'un joint vertical de lissage (non visible) assemblé sur un joint supérieur de double étanchéité J11,
- une zone de jonction H qui est disposée au dessus d'un angle du vitrage de la porte avant P1 et qui est formée du joint J11 assemblé sur un joint supérieur de double étanchéité J12 adjacent,
- une zone de jonction I qui est disposée au dessus de l'intervalle entre les portes avant P1 et arrière P2 et qui est formée, soit d'un joint vertical d'entre-cadre sur caisse J13 assemblé sur un joint supérieur de double étanchéité J12 ou J14 (le joint J14 s'étend au-dessus de la porte P2), soit des deux joints de double étanchéité J12 et J14 assemblés entre eux,
- une zone de jonction J qui est disposée au niveau du bord arrière supérieur de la porte P2 et qui est formée du joint de double étanchéité J14 assemblé sur un joint vertical de lissage ou joint de custode avant J15, et
- une zone de jonction K qui est disposée au niveau de l'extrémité arrière de la porte P2 et qui est formée de ce joint J15 assemblé sur un joint de passage de roue ou d'antisalissure sur caisse (non visible).

La figure 4 illustre un mode d'assemblage selon l'art antérieur d'un profilé d'étanchéité souple extrudé 1, tel que le joint antisalissure J3 de la figure 1, sur un profilé rigide de fixation 10 moulé par injection qui est monté sur la face interne d'un cadre de porte 20 et qui forme par exemple le joint de lissage J1 de cette figure 1.

Le profilé extrudé 1 présente dans cet exemple de réalisation une partie d'étanchéité tubulaire 2 souple qui est destinée à être monté au contact du dormant 30 de caisse de l'automobile et qui est surmontée d'une patte de montage 3 relativement plus rigide, de sorte à présenter sensiblement une forme de « σ ». Cette patte de montage 3 intègre de manière connue un ou plusieurs pions de clipage 4 faisant saillie (dans ce derniers cas répartis à intervalles de longueur réguliers sur la patte 3), le ou chaque pion 4 étant solidarisé avec le bord d'un orifice de réception 5 préalablement formé dans le profilé 1.

Comme illustré à la figure 4, ce profilé extrudé 1 est fixé par clipage sur le profilé moulé 10, par insertion du ou de chaque pion 4 solidaire du profilé extrudé 1 dans un orifice de clipage 11 correspondant du profilé 10 qui est obtenu de façon connue au moyen d'une cinématique de moule supplémentaire pour l'obtention de ce profilé 10 perforé.

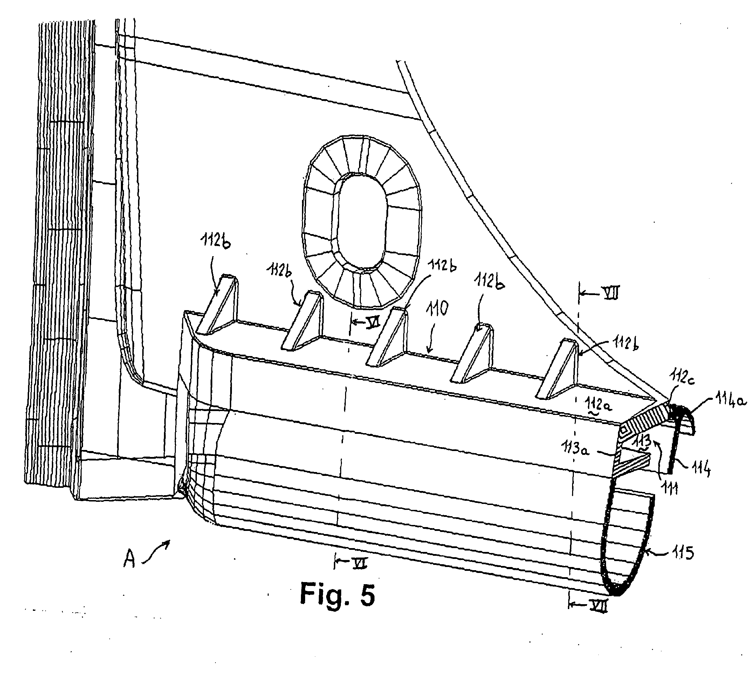

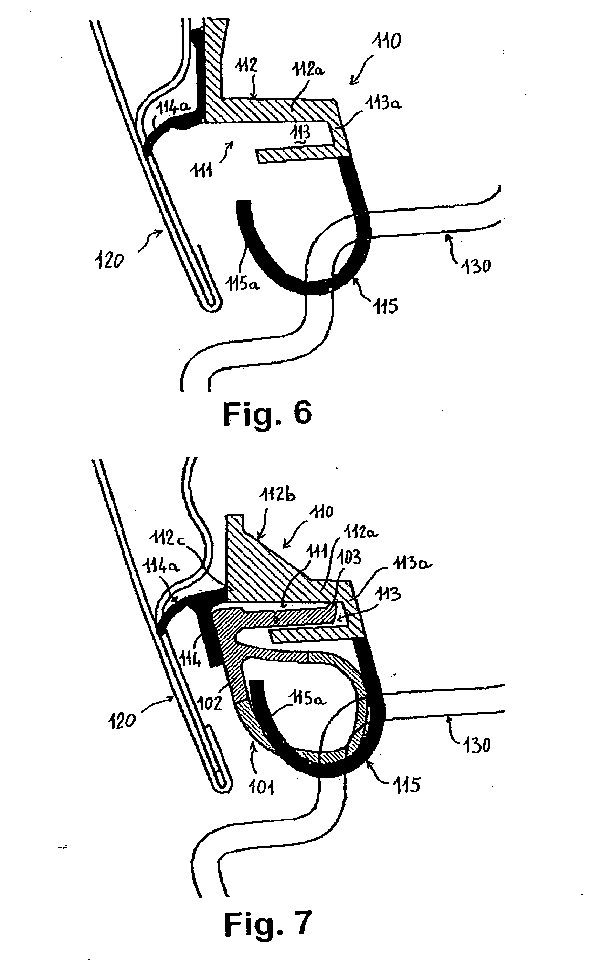

Le profilé moulé 110 selon un exemple de réalisation de l'invention qui est illustré à la fois en perspective et en section transversale à la figure 5 est destiné à être fixé sur la face interne d'un cadre de porte 120 en regard du dormant de caisse 130 de l'automobile (le cadre 120 et le dormant 130 sont représentés en section transversale aux figures 6 et 7).

Comme illustré aux figures 5 à 7, le profilé moulé 110 comporte essentiellement un crochet 111 apte à retenir directement la patte de montage 103 du profilé extrudé 101 par exemple dans la zone de jonction A entre un joint vertical de lissage J1 et un joint antisalissure J3, comme cela sera décrit ci-après en référence à la figure 7 (ce profilé extrudé 101 présentant, à l'instar du profilé 1, une section transversale en forme de « σ » comprenant une partie d'étanchéité tubulaire 102 qui se termine par cette patte 103).

Ce profilé moulé 110, au moins en partie rigide et avantageusement fabriqué par bi-injection, comprend dans la zone de jonction A, comme illustré dans l'exemple de la figure 5 :
- une partie rigide de tenue et de guidage 112 qui présente en saillie sur sa longueur une pluralité de contreforts 112b espacés et sensiblement en forme de triangles rectangles (voir figure 5), chaque contrefort 112b épaulant une paroi latérale 112a d'une gorge de guidage 113 qui forme le crochet de retenue 111 et qui est apte à recevoir via sa section transversale en U la patte de montage 103 du profilé extrudé 101 (voir figure 7), cette paroi 112a se prolongeant à 90° par un fond 113a de la gorge 113 (la partie 112 présente de préférence une dureté Shore D égale ou supérieure à 30 et est par exemple à base de polypropylène, d'un polyamide, de polycarbonate, d'un terpolymère ASA ou d'un vulcanisat thermoplastique TPV, tel que le Végaprène®) ;
- une lèvre de poussée 114 optionnelle (voir figure 7) qui est destinée à maintenir la patte 103 du profilé extrudé 101 dans la gorge 113 et qui s'étend à partir de l'extrémité 112c de la paroi latérale 112a de la gorge 113 (la lèvre 114, de dureté Shore A de préférence comprise entre 40 et 80, forme sensiblement en section transversale le jambage d'un « T » dont le sommet 114a s'étend à partir de cette extrémité 112c et se termine par une portion d'accostage apte à venir en appui contre le cadre de porte 120) ; et
- une lèvre de retenue 115 souple qui est destinée à retenir la partie d'étanchéité tubulaire 102 du profilé extrudé 101 en l'enserrant partiellement et qui prolonge le fond 113a de la gorge 113 dans la même direction, puis se prolonge en sens inverse par une portion recourbée 115a en direction de l'entrée de la gorge 113 en ménageant avec cette dernière un espace pour coincer la partie d'étanchéité 102 en appui sur la lèvre 115.

La figure 7 illustre la fixation directe du profilé souple extrudé 101 sur le profilé moulé en partie rigide 110 via le logement de la patte de montage 103 dans la gorge de guidage 113 et contre la lèvre de poussée 114, et en outre avantageusement via le coincement de la partie tubulaire 102 entre cette gorge 113 et la portion recourbée 115a de la lèvre de retenue 115. On comprend ainsi que la lèvre de poussée 114 et la lèvre de retenue 115, toutes deux optionnelles, contribuent avantageusement à améliorer la tenue du profilé extrudé 101 sur le profilé moulé 110 en empêchant le profilé 101 de se « déchausser » du crochet 111.

## Revendications

1. Module d'étanchéité (101, 110) pour baie de véhicule à moteur comprenant au moins un profilé moulé par injection (110) qui est au moins partiellement rigide et un profilé d'étanchéité souple et extrudé (101), ces profilés étant adaptés pour être montés sur un cadre (120, 130) d'un ouvrant (P1, P2) ou d'un dormant de ladite baie, ce module présentant au moins une zone de jonction (A à F) entre ces profilés où le profilé extrudé est fixé sur le profilé moulé, le ou chaque profilé extrudé étant directement retenu par le profilé moulé correspondant dans ladite ou chaque zone de jonction, via un crochet (111) formé dans ledit profilé moulé, **caractérisé en ce que** ce profilé moulé est un joint qui est destiné à équiper l'intérieur d'une porte latérale avant ou arrière (P1 ou P2) d'automobile ou du dormant (130) entourant cette porte, et qui est choisi dans le groupe constitué par les joints de lissage (J1, J2), les joints entre une aile et une porte, les joints entre portes adjacentes, les lécheurs et les coulisses, ladite ou chaque zone de jonction étant prévue en l'un des angles de ladite porte.

2. Module d'étanchéité (101, 110) selon la revendication 1, **caractérisé en ce que** ledit crochet (111) est formé par une gorge de guidage (113) dudit profilé moulé (110), dans laquelle est enfoncée une patte de montage (103) dudit profilé extrudé (101).

3. Module d'étanchéité (101, 110) selon la revendication 2, **caractérisé en ce que** ladite gorge (113) présente une section transversale sensiblement en U et **en ce que** ledit profilé extrudé (101) présente une section transversale sensiblement en forme de « σ », comprenant une partie d'étanchéité (102) de type tubulaire qui se termine par ladite patte de montage (103) formant le sommet du « σ ».

4. Module d'étanchéité (101, 110) selon la revendication 2 ou 3, **caractérisé en ce que** ledit profilé moulé (110) comprend, dans ladite ou chaque zone de jonction, une partie rigide de tenue et de guidage (112) qui présente une dureté Shore D égale ou supérieure à 30, étant par exemple à base de polypropylène, d'un polyamide, de polycarbonate, d'un terpolymère ASA (acrylique/ styrène/ acrylonitrile) ou d'un vulcanisat thermoplastique (TPV).

5. Module d'étanchéité (101, 110) selon la revendication 4, **caractérisé en ce que** ladite partie rigide de tenue et de guidage (112) présente en saillie sur sa longueur une pluralité de contreforts (112c) espacés et sensiblement en forme de triangles rectangles, chaque contrefort épaulant une paroi latérale (112a) de ladite gorge de guidage (113) qui se prolonge à 90° environ par un fond (113a) de cette gorge.

6. Module d'étanchéité (101, 110) selon la revendication 4 ou 5, **caractérisé en ce que** ledit profilé moulé (110) comprend en outre une lèvre de poussée (114) dudit profilé extrudé (101) qui s'étend à partir d'une extrémité (112c) de ladite paroi latérale (112a) de ladite gorge (113) et qui est apte à appuyer sur ladite patte de montage (103) de sorte à la maintenir au fond de ladite gorge (113).

7. Module d'étanchéité (101, 110) selon la revendication 6, **caractérisé en ce que** ladite lèvre de poussée (114) forme sensiblement, en section transversale, le jambage d'un « T » dont le sommet (114a) s'étend à partir de ladite extrémité (112c) et se termine par une portion d'accostage apte à venir en appui contre ledit cadre (120).

8. Module d'étanchéité (101, 110) selon la revendication 6 ou 7, **caractérisé en ce que** ladite lèvre de poussée (114) présente une dureté Shore A comprise entre 40 et 80.

9. Module d'étanchéité (101, 110) selon une des revendications 3 à 8, **caractérisé en ce que** ledit profilé moulé (110) comprend en outre un moyen de retenue (115) dudit profilé extrudé (101) qui est apte à enserrer partiellement ladite partie d'étanchéité tubulaire (102).

10. Module d'étanchéité (101, 110) selon la revendication 9, **caractérisé en ce que** ledit moyen de retenue comprend une lèvre de retenue (115) qui prolonge le fond de ladite gorge (113) sensiblement dans la même direction, puis se prolonge en sens inverse par une portion recourbée (115a) en direction de l'entrée de ladite gorge en ménageant avec cette dernière un espace pour coincer ladite partie d'étanchéité tubulaire (102) en appui sur ladite lèvre de retenue.

11. Module d'étanchéité (101, 110) selon une des revendications précédentes, **caractérisé en ce que** ledit profilé extrudé (101) est un joint d'étanchéité choisi dans le groupe constitué par les joints antisalissure (J3, J4, J5), les joints bas de marche, les lécheurs (J7, J8) et les coulisses (J9) et les joints de double étanchéité.

12. Module d'étanchéité (101, 110) selon la revendication 11, **caractérisé en ce que** ledit profilé moulé (110) et ledit profilé extrudé (101) sont destinés à former un joint supérieur de double étanchéité sur caisse (J11, J12, J14) pour ladite porte (P1, P2).

13. Baie de véhicule à moteur, telle qu'un dormant ou un ouvrant de porte latérale avant ou arrière (P1 ou P2) d'automobile, **caractérisée en ce qu'**elle est équipée d'un module d'étanchéité (101, 110) selon une des revendications précédentes.

## Claims

1. Sealing module (101, 110) for an opening in a motor vehicle, comprising at least one injection-moulded profile (110) which is at least partially rigid and a flexible extruded sealing profile (101), these profiles being adapted to be mounted on a frame (120, 130) of an openable panel (P1, P2) or of a surround of said opening, this module having at least one junction zone (A to F) between these profiles in which the extruded profile is fixed to the moulded profile, the or each extruded profile being retained directly by the corresponding moulded profile in the or each junction zone, via a hook (111) formed in said moulded profile, **characterised in that** this moulded profile is a joint which is intended to be fitted to the interior of a front or rear side door (P1 or P2) of a motor car or of the surround (130) surrounding this door, and which is selected from among the smoothing joints (J1, J2), the joints between a wing and a door, the joints between adjacent doors, the wipe seals and the glass run channels, the or each junction zone being provided in one of the angles of said door.

2. Sealing module (101, 110) according to claim 1, **characterised in that** the hook (111) is formed by a guide channel (113) of said moulded profile (110) in which is embedded a mounting lug (103) of said extruded profile (101).

3. Sealing module (101, 110) according to claim 2, **characterised in that** the channel (113) has a substantially U-shaped cross-section and **in that** the said extruded profile (101) has a substantially "σ"-shaped cross-section, comprising a tubular sealing portion (102) which terminates in said mounting lug (103) forming the top of the "σ".

4. Sealing module (101, 110) according to claim 2 or 3, **characterised in that** the said moulded profile (110) comprises, in the or each junction zone, a rigid holding and guiding member (112) which has a Shore D hardness greater than or equal to 30, being based for example on polypropylene, a polyamide, polycarbonate, an ASA terpolymer (acrylic / styrene / acrylonitrile) or a thermoplastic vulcanisate (TPV).

5. Sealing module (101, 110) according to claim 4, **characterised in that** the rigid holding and guiding member (112) has, projecting along its length, a plurality of spaced-apart buttresses (112c) substantially in the shape of right-angled triangles, each buttress supporting a side wall (112a) of said guide channel (113) which is extended at about 90° by a bottom (113a) of said channel.

6. Sealing module (101, 110) according to claim 4 or 5, **characterised in that** the moulded profile (110) further comprises a thrust lip (114) of said extruded profile (101), which extends from one end (112c) of said side wall (112a) of said channel (113) and which is adapted to bear on said mounting lug (103) so as to hold it against the bottom of said channel (113).

7. Sealing module (101, 110) according to claim 6, **characterised in that** the thrust lip (114) substantially forms the descender of a "T" in cross-section, the top (114a) of which extends from said end (112c) and terminates in a docking portion adapted to bear against said surround (120).

8. Sealing module (101, 110) according to claim 6 or 7, **characterised in that** said thrust lip (114) has a Shore A hardness of between 40 and 80.

9. Sealing module (101, 110) according to one of claims 3 to 8, **characterised in that** the said moulded profile (110) further comprises a retaining means (115) for said extruded profile (101), which is adapted to partially embrace the said tubular sealing portion (102).

10. Sealing module (101, 110) according to claim 9, **characterised in that** the said retaining means comprises a retaining lip (115) which extends the bottom of said channel (113) substantially in the same direction, then continues in the opposite direction by means of a curved portion (115a) towards the entrance to said channel, defining with the latter a space for squeezing said tubular sealing portion (102) into abutment on said retaining lip.

11. Sealing module (101, 110) according to one of the preceding claims, **characterised in that** the extruded profile (101) is a sealing joint selected from among the antifouling joints (J3, J4, J5), the door sill joints, the wipe seals (J7, J8) and the glass run channels (J9) and the double sealing joints.

12. Sealing module (101, 110) according to claim 11, **characterised in that** the moulded profile (110) and the extruded profile (101) are intended to form an upper double-seal box joint (J11, J12, J14) for said door (P1, P2).

13. Opening in a motor vehicle, such as a door surround or an openable panel of a front or rear side door (P1 or P2) of a car, **characterised in that** it is fitted with a sealing module (101, 110) according to one of the preceding claims.

## Patentansprüche

1. Abdichtungsmodul (101, 110) für eine Kraftfahrzeugöffnung, das aufweist: zumindest ein durch Spritzguß gefertigtes Profil (110), das zumindest teilweise starr ist, und ein weiches und extrudiertes Abdichtungsprofil (101), wobei die Profile angepasst ist, an einem Rahmen (120, 130) eines Flügels (P1, P2) oder einer Einfassung der Öffnung montiert zu werden, wobei das Modul zumindest einen Verbindungsbereich (A bis F) zwischen den Profilen aufweist, wo das extrudierte Profil an dem gegossenen Profil befestigt ist, wobei das oder jedes extrudierte Profil durch das entsprechende gegossene Profil in dem oder jedem Verbindungsbereich über einen in dem gegossenen Profil ausgebildeten Haken (111) direkt gehalten wird, **dadurch gekennzeichnet, dass** das gegossene Profil eine Dichtung ist, die dazu bestimmt ist, das Innere einer vorderen oder hinteren Fahrzeugseitentür (P1 oder P2) oder der diese Tür umgebenden Einfassung (130) auszustatten und die aus der Gruppe ausgewählt wurde, die durch Glättdichtungen (J1, J2), die Dichtungen zwischen einem Flügel und einer Tür, die Dichtungen zwischen benachbarten Türen, Dichtstreifen und Rillen gebildet ist, wobei der oder jeder Verbindungsbereich in einem der Winkel der Tür vorgesehen ist.

2. Abdichtungsmodul (101, 110) nach Anspruch 1, **dadurch gekennzeichnet, dass** der Haken (111) durch eine Führungsausnehmung (113) des gegossenen Profils (110) gebildet ist, in der ein Montagefuß (103) des extrudierten Profils (101) versenkt ist.

3. Abdichtungsmodul (101, 110) nach Anspruch 2, **dadurch gekennzeichnet, dass** die Ausnehmung (113) einen Querschnitt im Wesentlichen in U-Form aufweist und dass das extrudierte Profil (101) einen Querschnitt im Wesentlichen in Form eines "σ" aufweist, das ein Abdichtungsteil (102) vom Rohrtyp aufweist, das in dem höchsten Punkt des "σ" bildenden Montagefusses (103) endet.

4. Abdichtungsmodul (101, 110) nach Anspruch 2 oder 3, **dadurch gekennzeichnet, dass** das gegossene Profil (110) in dem oder jedem Verbindungsbereich einen starren Teil (112) zum Halten und Führen aufweist, der eine Shore-D-Härte von gleich oder größer 30 aufweist und der auf Polypropylen, Polyamid, Polycarbonat, einem ASA (Acryl/Styren/Acrylnitril)-Terpolymer oder einem thermoplastischen Vulkanisat (TPV) basiert.

5. Abdichtungsmodul (101, 110) nach Anspruch 4, **dadurch gekennzeichnet, dass** das starre Halte- und Führungsteil (112) über seine Länge vorspringend eine Vielzahl von Stützeinrichtungen (112c) aufweist, die beabstandet sind und im Wesentlichen die Form von rechtwinkligen Dreiecken haben, wobei jede Stützeinrichtung eine Seitenwand (112a) der Führungsausnehmung (113a) stützt, die sich mit 90° ungefähr in einem Boden (113a) dieser Ausnehmung fortsetzt.

6. Abdichtungsmodul (101, 110) nach Anspruch 4 oder 5, **dadurch gekennzeichnet, dass** das gegossene Profil (110) ferner eine Schublippe (114) des extrudierten Profils (101) aufweist, die sich von einem Ende (112c) der Seitenwand (112a) der Ausnehmung (113) erstreckt und die in der Lage ist, auf den Montagefuß (103) in der Weise zu drücken, dass dieser am Boden der Ausnehmung (113) gehalten wird.

7. Abdichtungsmodul (101, 110) nach Anspruch 6, **dadurch gekennzeichnet, dass** die Schublippe (114) im Wesentlichen im Querschnitt den Grundstrich eines "T" bildet, dessen höchster Punkt (114a) sich von dem Ende (112c) erstreckt und in einem Berührungsabschnitt endet, der in der Lage ist, gegen den Rahmen (120) gedrückt zu werden.

8. Abdichtungsmodul (101, 110) nach Anspruch 6 oder 7, **dadurch gekennzeichnet, dass** die Schublippe (114) eine Shore-A-Härte zwischen 40 und 80 aufweist.

9. Abdichtungsmodul (101, 110) nach einem der Ansprüche 3 bis 8, **dadurch gekennzeichnet, dass** das gegossene Profil (110) ferner eine Halteeinrichtung (115) des extrudierten Profils (101) aufweist, die in der Lage ist, das rohrförmige Abdichtungsteil (102) teilweise zu umschließen.

10. Abdichtungsmodul (101, 110) nach Anspruch 9, **dadurch gekennzeichnet, dass** die Halteeinrichtung eine Haltelippe (115) aufweist, die die Fortsetzung des Bodens der Ausnehmung (113) im Wesentlichen in der gleichen Richtung bildet, dann die Fortsetzung in umgekehrte Richtung mit einem gebogenen Abschnitt (115a) in Richtung des Eintritts der Ausnehmung bildet, indem mit letztgenanntem ein Raum vorgesehen wird, um das rohrförmige Dichtteil (102) mit Druck auf die Haltelippe einzuklemmen.

11. Abdichtungsmodul (101, 110) nach einem der vorhergehenden Ansprüche, **dadurch gekennzeichnet, dass** das extrudierte Profil (101) eine Dichtvorrichtung ist, die aus der Gruppe ausgewählt ist, die durch schmutzabweisende Dichtungen (J3, J4, J5), Schwellendichtungen, Dichtstreifen (J7, J8) und Rillen (J9) und Doppeldichtvorrichtungen gebildet ist.

12. Abdichtungsmodul (101, 110) nach Anspruch 11, **dadurch gekennzeichnet, dass** das gegossen Profil (110) und das extrudierte Profil (101) dazu bestimmt sind, eine obere Doppeldichtung (J11, J12, J14) an der Karosserie für die Tür (P1, P2) zu bilden.

13. Kraftfahrzeugöffnung, wie eine Einfassung oder ein Flügel der vorderen oder hinteren Kraftfahrzeug-Seitentür (P1 oder P2), **dadurch gekennzeichnet, dass** ein Abdichtungsmodul (101, 110) nach einem der vorhergehenden Ansprüche daran vorgesehen ist.
